# FASCICULE DE BREVET EUROPEEN

(11) **EP 4 338 594 B1**
(45) Date de publication et mention de la délivrance du brevet: **15.04.2026**
(21) Numéro de dépôt: 23197523.6
(22) Date de dépôt: 14.09.2023
(51) Int. Cl.: A22C 7/00, A22C 17/00

(54) **DISPOSITIF DE FABRICATION D'UN PRODUIT ALIMENTAIRE SE PRÉSENTANT SENSIBLEMENT SOUS LA FORME D'UNE TOUR, ENSEMBLES ET PROCÉDÉ DE FABRICATION D'UN PRODUIT ALIMENTAIRE CORRESPONDANT**
VORRICHTUNG ZUR HERSTELLUNG EINES IM WESENTLICHEN TURMFÖRMIGEN NAHRUNGSMITTELS, ANORDNUNGEN UND VERFAHREN ZUR HERSTELLUNG EINES ENTSPRECHENDEN LEBENSMITTELS
DEVICE FOR PRODUCING A SUBSTANTIALLY TOWER-SHAPED FOOD PRODUCT, ASSEMBLIES AND METHOD FOR PRODUCING A CORRESPONDING FOOD PRODUCT

(30) Priorité: 19.09.2022 FR 2209419
(43) Date de publication de la demande: 20.03.2024
(73) Titulaire: System B, 53810 Change (FR)
(72) Inventeur: BEUCHER, Jérémy, 53960 Boncamp (FR); LECLERC, Mathis, 53950 Louverne (FR)
(74) Mandataire: Vidon Brevets & Stratégie

(56) Documents cités:
- EP-A1- 1 462 006
- WO-A1-2020/214102
- DE-C2- 10 043 386
- DE-U1- 202016 006 160
- US-A- 4 744 130

## Description

### Domaine de la divulgation

Le domaine de la divulgation est celui de l'agroalimentaire, et notamment les produits alimentaires commercialisés en boucherie ou en grandes et moyennes surfaces de distribution. Plus particulièrement, la divulgation concerne les dispositifs d'aide à la fabrication de produits alimentaires, se présentant par exemple sous la forme d'une tour obtenue par un empilement d'aliments sélectionnés notamment parmi les viandes, les poissons, les légumes ou un mélange de ceux-ci. Généralement, ces tours d'aliments sont commercialisées crues de sorte que le client puisse faire cuire lui-même le produit alimentaire, par exemple au four ou au barbecue. Ces produits alimentaires sont également connus sous le nom de sapin, broche de viandes, kebab ou pyramide.

### Art antérieur

Il est connu, pour fabriquer de tels tours d'aliments, d'utiliser une broche sur laquelle un utilisateur empile manuellement les différents aliments (viandes, poissons, légumes, etc.) tout en essayant de donner une forme souhaitée à cet empilement. Toutefois, un inconvénient de cette technique réside dans le fait que l'empilement des différents aliments est relativement chronophage, notamment lorsque l'on souhaite donner une forme esthétique à la tour. Ce critère esthétique ne peut être ignoré afin de faciliter la vente de tels produits.

Un autre inconvénient de cette technique réside dans le fait que, lorsque les aliments sont assemblés sur la broche, le déplacement du produit alimentaire dit « fini », avant cuisson, est relativement difficile. En effet, le risque de chute de certains aliments qui pourraient être mal fixés sur la broche est relativement élevé, de même que la déformation ou l'affaissement du produit. Le document US 4,744,130 décrit un dispositif de fabrication d'un produit alimentaire se présentant sous la forme d'une tour et comprenant une base sur laquelle des aliments sont destinés à être empilés, la base comprenant un socle et une pique s'étendant perpendiculairement au socle. Le dispositif comprend un moule en deux parties coopérant avec la base pour former un logement de réception des aliments. Il existe donc un besoin de fournir une nouvelle solution de fabrication d'un produit alimentaire se présentant sous la forme d'une tour, obtenue par l'empilement d'aliments, qui soit simple et rapide à mettre en œuvre, qui permette d'obtenir une forme régulière et esthétique du produit tout en facilitant son transport/déplacement après fabrication.

### Résumé de l'invention

L'invention a été conçue en conservant ces inconvénients de l'art antérieur à l'esprit. L'invention se rapporte plus particulièrement à un dispositif de fabrication d'un produit alimentaire se présentant globalement sous la forme d'une tour, le dispositif comprenant une base sur laquelle des aliments sont destinés à être empilés, ladite base comprenant un socle et une pique s'étendant perpendiculairement audit socle, ledit dispositif comprenant un moule coopérant avec ladite base pour former un logement de réception desdits aliments empilés sur ladite base, ledit moule comprenant au moins une première demi-coque et une deuxième demi-coque, coopérant avec ladite base pour former ledit logement de réception desdits aliments, chacune desdites première et deuxième demi-coques comprenant des moyens de solidarisation audit socle situés au niveau de l'extrémité inférieure desdites demi-coques, lesdits moyens de solidarisation comprenant un épaulement s'étendant sensiblement sur l'ensemble de la périphérie de l'extrémité inférieure desdites demi-coques et au moins un ergot s'étendant en vis-à-vis dudit épaulement et définissant avec ledit épaulement une rainure de réception dudit socle.

Il est ainsi possible d'ajouter des aliments à empiler sur la base, en les insérant par la partie supérieure, ouverte, du moule, tout en permettant le retrait ultérieur de celui-ci, sans affecter les aliments qui y ont été empilés.

De plus, un tel dispositif offre la possibilité de solidariser les aliments entre eux en les piquant au fur et à mesure.

L'invention fournit une solution permettant de simplifier la fabrication d'un produit alimentaire se présentant sous la forme d'une tour ou d'une pyramide d'aliments. En effet, la mise en œuvre d'un moule comprenant deux demi-coques coopérant avec le socle de la broche permet de faciliter l'assemblage des aliments sur la pique de la broche. Le moule permet de contenir les aliments, c'est-à-dire de les maintenir en position lors de l'empilement des aliments. Ainsi, les risques de chutes d'aliments et d'affaissement de la tour sont supprimés lors de la fabrication du produit. En outre, le moule permet de donner une forme régulière et répétable au produit alimentaire. L'esthétique des produits alimentaires est donc également améliorée.

Les moyens de solidarisation des première et deuxième demi-coques de ce dispositif rendent le moule apte à recevoir et maintenir de manière efficace et fiable le socle de la broche.

En outre, la rainure de réception, définie par les épaulements des demi-coques et un ou plusieurs ergot(s) du dispositif, permet au socle d'être maintenu de manière fiable. Le socle est ainsi parfaitement centré par rapport au moule de par la mise en œuvre de l'épaulement qui est dimensionné pour accueillir le socle de manière ajustée. Selon un aspect particulier, le ou les ergots s'étendent sur une partir seulement de la périphérie du bord inférieur du moule de sorte à faciliter la prise du socle lors de l'assemblage des demi-coques avec le socle. De plus, ces ergots peuvent également présenter une arête chanfreinée afin de faciliter la séparation du moule et donc la libération du produit alimentaire fini.

Selon une caractéristique particulière, le dispositif comprend des moyens de verrouillage réversibles de ladite première demi-coque avec ladite deuxième demi-coque.

Ainsi, le moule est maintenu de manière efficace et fiable sur le socle de la broche. De cette manière, l'utilisateur peut assembler les aliments sur la broche sans risque de séparation des demi-coques du moule.

Selon une caractéristique particulière, lesdits moyens de verrouillage réversibles comprennent des aimants disposés en vis-à-vis sur les bords latéraux desdites première et deuxième demi-coques.

La mise en œuvre de ces aimants permet de faciliter et assister le rapprochement des demi-coques jusqu'à leur solidarisation. De plus, la force magnétique créée par les aimants est dimensionnée pour permettre un maintien optimal de moule avec le socle sans risque de séparation non souhaitée. Les aimants sont également dimensionnés pour permettre une séparation manuelle par l'utilisateur. En outre, les aimants sont dimensionnés et positionnés sur chaque demi-coque de sorte à assister le centrage/l'alignement des demi-coques lors de leur rapprochement jusqu'au leur verrouillage.

Selon une caractéristique particulière, chacune desdites demi-coques comprend des moyens de préhension de sorte à faciliter le déplacement dudit dispositif et la séparation desdites demi-coques.

Ainsi, le moule peut être aisément déplacé, sans risque de chute du produit alimentaire. Ces moyens de préhension sont également destinés à faciliter la séparation des demi-coques par l'utilisateur lors du démoulage. Ces poignées permettent donc à l'utilisateur d'appliquer une force de séparation supérieure à la force magnétique créée par les aimants.

Selon une caractéristique particulière, le dispositif comprend des premiers moyens de solidarisation à un autre moule, dit moule additionnel, disposé de manière superposée sur ledit dispositif.

Ainsi, il est possible de superposer au moins un moule additionnel sur le dispositif afin de permettre la fabrication de produit alimentaire de hauteur plus importante. Pour ce faire, il est nécessaire de sélectionner une broche dont les dimensions du pic correspondent à la hauteur totale du moule et du ou des moules additionnels.

Selon une caractéristique particulière, le dispositif comprend des deuxièmes moyens de solidarisation à au moins un autre dispositif de fabrication d'un produit alimentaire disposé de manière adjacente audit dispositif.

Ainsi, il est possible d'obtenir une rangée de plusieurs dispositifs agencés de manière juxtaposée afin d'optimiser la fabrication d'une pluralité de produits alimentaires.

Selon une caractéristique particulière, le moule est fabriqué dans un matériau plastique alimentaire.

Un tel matériau permet de respecter les normes hygiéniques applicables à la fabrication de produits alimentaires.

Selon un autre aspect, l'invention se rapporte également à un ensemble de fabrication d'un produit alimentaire se présentant sous la forme d'une tour, ledit ensemble comprenant un dispositif tel que présenté précédemment, et un moule additionnel agencé de manière superposée sur ledit dispositif.

Un tel ensemble permet la fabrication de produit alimentaire de hauteur plus importante.

Selon un autre aspect, l'invention se rapporte également à un ensemble de fabrication d'un produit alimentaire se présentant sous la forme d'une tour, ledit ensemble comprenant au moins deux dispositifs tels que décrits précédemment, lesdits dispositifs étant agencés de manière juxtaposée.

Un tel ensemble permet d'obtenir une rangée de plusieurs dispositifs agencés de manière juxtaposée afin d'optimiser la fabrication d'une pluralité de produits alimentaires à la chaîne.

Selon une caractéristique particulière, lesdits deuxièmes moyens de solidarisation desdits au moins deux dispositifs comprennent deux supports de préhension reliant respectivement lesdites premières demi-coques et lesdites deuxièmes demi-coques desdits au moins deux dispositifs.

Ainsi, il est possible d'assembler et de séparer les moules de tous les dispositifs en une seule opération. De cette manière, les opérations à effectuer par l'utilisateur sont optimisées et le temps de fabrication est amélioré.

Selon une caractéristique particulière, ledit ensemble comprend au moins deux dispositifs agencés de manière juxtaposée, au moins un desdits au moins deux dispositifs comprenant au moins un moule additionnel disposé de manière superposé audit au moins dispositif.

Un tel ensemble permet d'optimiser la fabrication d'une pluralité de produits alimentaires de hauteur élevée. Il combine donc les avantages des ensembles décrits précédemment.

Selon une caractéristique particulière, lorsqu'il comprend au moins deux moules additionnels, ledit ensemble comprend lesdits au moins deux moules additionnels comprennent deux supports de préhension reliant respectivement lesdites premières demi-coques et lesdites deuxièmes demi-coques desdits au moins deux moules additionnels.

Ainsi, il est possible d'assembler et de séparer les moules simultanément de telle sorte que les opérations à effectuer par l'utilisateur sont optimisées et le temps de fabrication est amélioré.

Selon un autre aspect, l'invention se rapporte également à un procédé de fabrication d'un ou plusieurs produits alimentaires se présentant notamment sous la forme d'une tour d'aliments, mettant en œuvre un dispositif de fabrication tel que présenté précédemment ou d'un ensemble de ces dispositifs tel que présenté précédemment, ledit procédé comprenant, pour chaque dispositif :
- la fourniture de ladite base comprenant ledit socle et ladite pique s'étendant perpendiculairement audit socle ;
- la mise en position et le verrouillage desdites demi-coques dudit moule avec ledit socle ;
- optionnellement, la superposition d'au moins un moule additionnel ;
- l'assemblage desdits aliments dans ledit espace de réception par perçage et empilement desdits aliments sur ladite pique de ladite base ;
- optionnellement, le déplacement dudit dispositif ou dudit ensemble vers une zone de stockage ;
- le démoulage dudit produit alimentaire par séparation desdites demi-coques desdits moules.

Ainsi, un tel procédé permet de faciliter la fabrication de tour ou pyramide d'aliments. Le procédé permet également d'optimiser le temps de fabrication du produit alimentaire tout en permettant d'obtenir une forme régulière de ce dernier. Les différentes caractéristiques et aspects des dispositifs et des ensembles de dispositifs présentés précédemment sont combinables entre eux.

### Liste des Figures

L'invention, ainsi que les différents avantages qu'elle présente, seront plus facilement compris, à la lumière de la description qui va suivre d'un mode de réalisation illustratif et non limitatif de celle-ci, et des dessins annexés parmi lesquels :
- [Fig 1] est une vue en perspective d'un dispositif de fabrication d'un produit alimentaire selon la divulgation ;
- [Fig 2] est une vue éclatée et en perspective du dispositif de la figure 1 ;
- [Fig 3] est une vue de côté et en coupe transversale du dispositif de la figure 1 ;
- [Fig 4] est une vue de côté éclatée et en coupe du dispositif de la figure 1 ;
- [Fig 5] est une vue en coupe transversale et en perspective du dispositif de la figure 1 ;
- [Fig 6] est une vue éclatée montrant l'assemblage des deux demi-coques formant un moule pour le dispositif selon la divulgation ;
- [Fig 7] est une vue en perspective d'un ensemble comprenant deux dispositifs conformes à la divulgation disposés de manière superposée ;
- [Fig 8] est une vue partiellement éclatée de l'ensemble de la figure 7 ;
- [Fig 9] est une vue en perspective d'un ensemble comprenant deux dispositifs conformes à la divulgation agencés de manière juxtaposée ;
- [Fig 10] est une vue en perspective d'un ensemble comprenant quatre dispositifs conformes à la divulgation agencés de manière juxtaposée ;
- [Fig 11] est une vue en perspective montrant un premier mode de réalisation de l'ouverture/fermeture de l'ensemble de la figure 10 ;
- [Fig 12] est une vue en perspective montrant un deuxième mode de réalisation de l'ouverture/fermeture de l'ensemble de la figure 10 ;
- [Fig 13] est une vue en perspective d'un ensemble comprenant deux dispositifs conformes à la divulgation présentant respectivement un moule additionnel disposé de manière superposée sur chaque dispositif ;
- [Fig 14] est une vue en perspective d'un ensemble comprenant quatre dispositifs conformes à la divulgation présentant respectivement un moule additionnel disposé de manière superposée sur chaque dispositif ; et
- [Fig 15] est une vue schématique du procédé de fabrication d'un produit alimentaire conforme à la divulgation en utilisant au moins un dispositif selon la divulgation.

### Description détaillée

Le principe général de l'invention repose sur la mise en œuvre d'un moule autour d'une base sur laquelle les aliments à empiler (et éventuellement piquer) sont disposés. Le moule se présente globalement sous la forme d'un cylindre (ici circulaire mais on comprend que le moule pourrait se présenter sous la forme d'un tube rectangulaire, triangulaire, etc.) qui permet de donner une forme souhaitée au produit alimentaire fabriqué. Par commodité, cette base est par la suite appelée broche du fait de la présence d'une pique. La présence de cette pique n'est cependant pas obligatoire, notamment en cas de petite taille de l'agrégat alimentaire.

Dans un exemple de réalisation, le moule comprend par exemple deux demi-coques qui sont assemblées l'une à l'autre et qui viennent s'engager/coopérer avec le socle de la broche de sorte à assurer un maintien optimal du positionnement du moule par rapport à la broche.

De préférence, le moule présente également des moyens de verrouillage des demi-coques entres elles pour permettre une fabrication aisée du produit alimentaire, limitant ainsi le risque d'ouverture non souhaitée du moule pendant la fabrication du produit alimentaire.

La technique décrite se rapporte également à un ensemble comprenant au moins deux dispositifs, ces dispositifs pouvant être agencés de manière juxtaposée et/ou superposée les uns par rapport aux autres, comme détaillé dans la suite de cette description.

La solution de la présente invention permet donc de faciliter et d'optimiser la fabrication de produits alimentaires se présentant sous la forme d'une tour. En effet, grâce à la mise en œuvre du moule autour de la broche, le montage/assemblage du produit (c'est-à-dire le perçage et l'empilement des aliments sur la broche) est simplifié, tout comme le démoulage du produit dit « fini » qui est également facilité. La fabrication du produit alimentaire est donc rendue plus simple et plus rapide et plus sécurisée en limitant les risques de blessure de l'utilisateur (en évitant qu'il ne se blesse avec la pique de manière accidentelle).

De plus, la mise en œuvre du moule permet également d'obtenir un produit alimentaire dont la forme est régulière et donc plus esthétique.

L'utilisation d'un ou plusieurs moules selon la présente permet également de faciliter le transport et le déplacement du produit alimentaire avant démoulage.

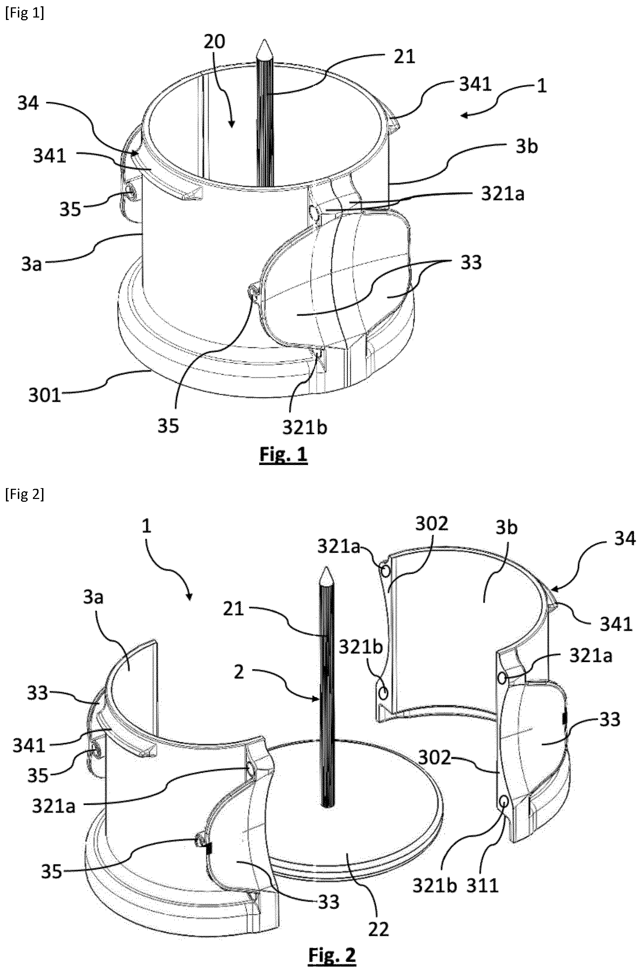

Plus précisément, la **figure 1** illustre un dispositif 1 conforme à la divulgation pour la fabrication d'un produit alimentaire se présentant sous la forme d'une tour d'aliments.

Dans cet exemple de réalisation, le dispositif 1 comprend une base, ou une broche, 2 présentant un socle, ou disque de base, 22 de forme sensiblement circulaire ainsi qu'une pique 21 s'étendant sensiblement perpendiculairement au socle 22.

De préférence, la pique 21 s'étend à partir du centre du socle 22, notamment pour des raisons d'équilibre du produit alimentaire dit « fini », c'est-à-dire après démoulage, comme décrit plus en détails dans la suite de cette description.

En outre, il est également préférable que la pique 21 soit centré par rapport au socle 22 de sorte que le produit alimentaire ait une présentation esthétique une fois démoulé, bien que cela ne soit pas obligatoire et dépende essentiellement de la forme recherchée du produit fini.

La pique 21 s'étend sensiblement de manière rectiligne et présente à son extrémité opposée au socle 22 une pointe permettant de faciliter l'assemblage des aliments sur la broche 2.

La broche 2 peut être fabriquée en bois, en métal ou en plastique. Ces matières doivent répondre à la contrainte de la compatibilité alimentaire.

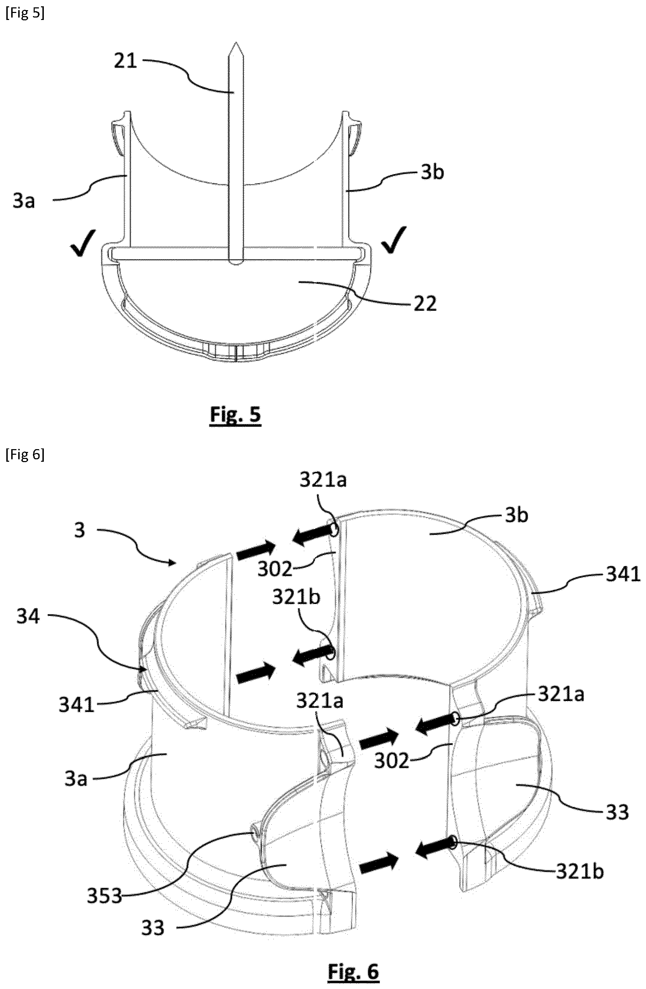

Dans cet exemple de réalisation, le dispositif 1 comprend un moule 3, visible seul sur la **figure 6** notamment. Le moule 3 comprend par exemple deux demi-coques, ou demi-supports, 3a et 3b, par exemple sensiblement symétriques pour faciliter sa mise en place et sa solidarisation avec le socle 22. Le moule 3 est destiné à coopérer avec la broche 2 de sorte que les parois intérieures du moule 3 forment avec le socle 22 un espace de réception 20 des aliments piqués et empilés sur la pique 21 de la broche 2.

Le moule 3 présente une forme et des dimensions adaptées à la broche 2. Il existe donc une multiplicité de dimensions pour le dispositif 1, notamment en ce qui concerne le diamètre intérieur et la hauteur moule et du pic 21, de sorte à répondre à tous types de besoins (utilisation industrielle ou artisanale par exemple).

La **figure 2** est une vue éclatée du dispositif 1 montrant la broche 2 située entre les deux demi-coques 3a, 3b du moule 3 avant assemblage de ces dernières. Lors de l'assemblage, les demi-coques 3a, 3b viennent enserrer le socle 22 de la broche 2.

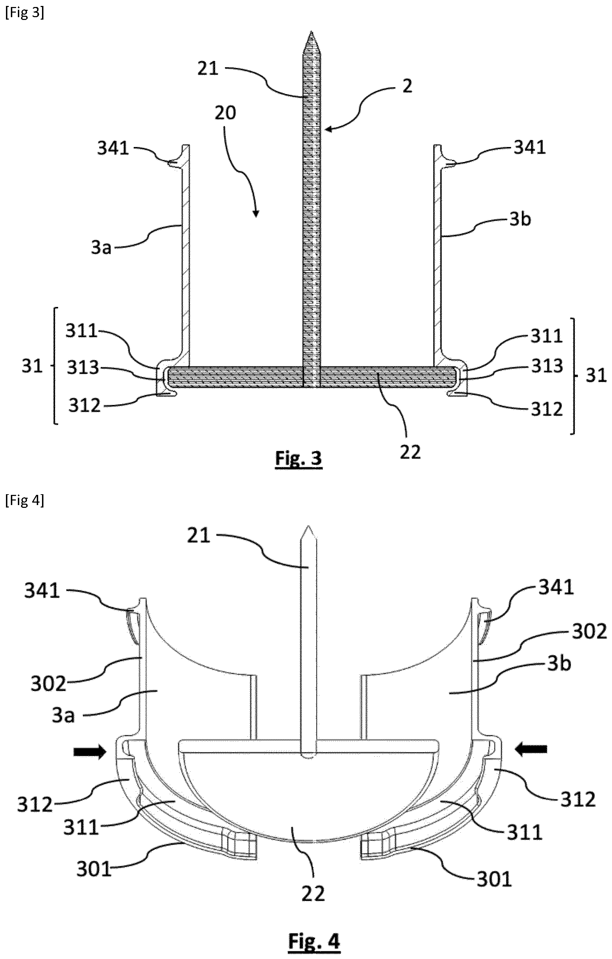

Les **figures 3, 4** **et** **5** sont des vues en coupe illustrant l'assemblage des demi-coques 3a, 3b avec le socle 22. Pour ce faire, les demi-coques comprennent des moyens de solidarisation 31 des demi-coques 3a, 3b avec le socle 22 de la broche 2.

Dans cet exemple, chacune des demi-coques 3a, 3b comprend, au niveau de son bord inférieur, ou extrémité inférieure, 301 un épaulement 311. En d'autres termes, le diamètre extérieur du moule 3 est plus important au niveau du bord inférieur 301 (c'est-à-dire la partie du moule 3 située au niveau du socle 22 une fois le dispositif 1 assemblé) que sur le reste du moule 3 (c'est-à-dire la partie du moule 3 en vis-à-vis du pic 21 de la broche 2).

En outre, chaque demi-coque 3a, 3b comprend au moins un ergot 312 disposé sur la face intérieure du moule 3 et faisant face à l'épaulement 311 de sorte à former une rainure 313 de réception du socle 22 de la broche 2. En d'autres termes, les ergots 312 sont disposés/s'étendent en vis-à-vis de l'épaulement 311.

Ainsi, les moyens de solidarisation 31 des demi-coques 3a, 3b avec le socle 22 de la broche 2 comprennent dans cet exemple un épaulement 311 et au moins un ergot 312 sur chaque demi-coque.

Dans cet exemple, chaque demi-coques 3a, 3b comprend deux ergots 312 disposés de sorte que, lorsque les demi-coques 3a, 3b sont assemblées, les ergots soient agencés de manière régulière le long de la périphérie de l'extrémité inférieure 301 du moule 3.

Les ergots 312 peuvent s'étendre sensiblement sur l'intégralité de la périphérie totale de l'extrémité inférieure 301 du moule 3. Dans une variante, les ergots 312 peuvent s'étendre sur une partie seulement de la périphérie totale de l'extrémité inférieure 301 du moule 3.

Ainsi, le socle 22 peut être enserré de manière simple et rapide entre les deux demi-coques 3a, 3b et le maintien du socle 22 dans la rainure 313 est fiable, sans risque de déplacement intempestif du socle 22 par rapport aux demi-coques 3a, 3b.

Le fait que les ergots 312 ne s'étendent pas tout le long de la périphérie de l'extrémité inférieure du moule 3 permet d'éviter de créer un effet « ventouse » entre le socle 22 et les demi-coques 3a, 3b lors de l'évacuation du socle 22, c'est-à-dire lors de l'ouverture/la séparation des demi-coques 3a, 3b. En effet, l'utilisation d'une marinade, par exemple, pour la préparation du produit alimentaire peut créer un tel effet. En outre, cela peut également permettre d'évacuer le jus/liquide des aliments piqués et empilés sur la broche 2.

En outre, il est possible de prévoir une arête chanfreinée (non illustrée) sur l'ergot 312 de sorte à faciliter la libération du socle 22 et donc du produit alimentaire fini, notamment lors de l'utilisation de marinade, de viande ou poisson dits « collants » qui pourraient causer une adhérence élevée contre la paroi intérieure d'une ou des demi-coques 3a, 3b et qui empêcherait donc la libération du socle 22 ou du produit alimentaire fini. En effet, l'utilisation de certains aliments peut faire que le produit alimentaire fini reste légèrement collé sur l'une ou l'autre des demi-coques.

Le dispositif 1, dans cet exemple de réalisation, comprend en outre des moyens de verrouillage 32 des demi-coques 3a, 3b entre elles et en position assemblée dans laquelle elles enserrent le socle 22.

Dans cet exemple, illustré sur la **figure 6****,** les moyens de solidarisation 32 se présentent sous la forme d'aimants 321 disposés sur les bords latéraux/adjacents 302 des demi-coques 3a, 3b. Par exemple, chaque bord latéral 302 comprend deux aimants 321a, 321b disposés à distance l'un de l'autre. Par exemple, un premier aimant 321a est situé sensiblement sur la partie haute/supérieure (c'est-à-dire dans la moitié supérieure) du bord latéral 302 de la demi-coque, tandis qu'un deuxième aimant 321b est situé en partie basse/inférieure (c'est-à-dire dans la moitié inférieure) du bord latéral 302 de la demi-coque. Le deuxième aimant 321b est disposé à proximité de l'épaulement 311.

Ainsi, la présence de ces aimants 321 permet de faciliter l'assemblage des demi-coques 3a, 3b qui s'effectue ainsi naturellement et sans effort pour l'utilisateur. En effet, les aimants 321 sont disposés de façon que les deux demi-coques 3a, 3b se rapprochent et se maintiennent entre elles grâce à la force magnétique créée par les aimants 321.

Par ailleurs, les aimants 321 sont dimensionnés pour garantir que la force magnétique créée fournissent une force suffisante pour que les demi-coques restent en position lors de la mise en place des aliments à l'intérieur du moule 3. Notamment, cette force magnétique est suffisante pour empêcher le moule de s'ouvrir lorsque l'utilisateur dispose les aliments dans le moule 3, même s'il est parfois nécessaire pour l'utilisateur d'exercer une certaine force, non volontaire, contre les parois intérieures du moule 3 pour disposer correctement les aliments.

Néanmoins, les aimants 321 sont également dimensionnés pour que la force magnétique ne soit pas trop élevée, de sorte à permettre une séparation aisée des deux demi-coques 3a,3b lorsque l'on souhaite démouler le produit alimentaire fini, notamment en tirant sur les moyens de préhension 33 qui sont décrits dans la suite de cette description.

En outre, les aimants sont également configurés/dimensionnés pour assister le guidage/centrage des demi-coques lors de leur rapprochement jusqu'à leur solidarisation. De cette manière, la prise en étau du socle 22 est facilitée.

De plus, les aimants 321 peuvent être recouverts d'un revêtement résistant à la corrosion et peuvent être emmanchés serrés dans les demi-coques 3a, 3b. Dans une variante, les aimants 321 peuvent être moulés dans les demi-coques 3a, 3b de sorte qu'ils ne soient pas visibles/apparents sur les bords latéraux 302, sans pour autant que cela ait un effet néfaste sur la force magnétique créée.

La mise en œuvre des aimants 321 et des ergots 312 permet en outre de faciliter la prise du socle 22 lors de l'assemblage des demi-coques 3a, 3b. La force magnétique créée par les aimants 321 ainsi que la forme et la disposition des ergots 312 permet d'accompagner/guider le socle 22 jusqu'au fond de la rainure 313 et de garantir un maintien optimal du socle 22. L'assemblage du socle 22 avec les demi-coques 3a, 3b s'effectue donc de manière sensiblement automatique.

Cet exemple décrit des moyens de verrouillage 32 se présentant de préférence sous la forme d'aimants 321. On comprend bien évidemment que d'autres moyens de solidarisation pourraient être envisagés pour assurer un positionnement et un maintien optimal des demi-coques entre elles sans pour autant s'écarter du principe général décrit ici. Notamment, des écrous papillon et des vis pourraient également être utilisés en lieu et place ou en complément des aimants. Dans un autre exemple, des clips de fixation, chaque clip ayant une partie mâle sur une demi coque et une partie femelle correspondante sur l'autre demi coque pourraient également être mis en œuvre en plus ou à la place des aimants. Dans un autre exemple, un ou plusieurs colliers de serrage peuvent également être utilisés en plus ou à la place des moyens de fixation présentés précédemment.

De préférence, le moule 3 comprend, sur chacune des demi-coques 3a, 3b, des moyens de préhension 33 qui permettent à l'utilisateur, d'une part, de mettre en position les demi-coques 3a, 3b avant leur assemblage, et d'autre part, de désolidariser les demi-coques 3a, 3b lors du démoulage du produit alimentaire fini.

Dans cet exemple, notamment illustré sur la **figure 1****,** les moyens de préhension 33 se présentent sous la forme de poignées 331 situées sensiblement à mi-hauteur des demi-coques 3a, 3b. Plus précisément, ces poignées 331 se situent entre les premier 321a et deuxième 321b aimants de sorte que l'effort appliqué par l'utilisateur sur les poignées 331 lors de la séparation des demi-coques 3a, 3b soit réparti de manière optimale et facilite ainsi la séparation des aimants 321. En d'autres termes, ce positionnement des poignées 331 permet de faciliter l'application d'une force de séparation supérieure à la force magnétique des aimants 321.

Dans cet exemple, lorsque les demi-coques 3a, 3b, sont assemblées, les poignées 331 de chacune des demi-coques viennent en vis-à-vis.

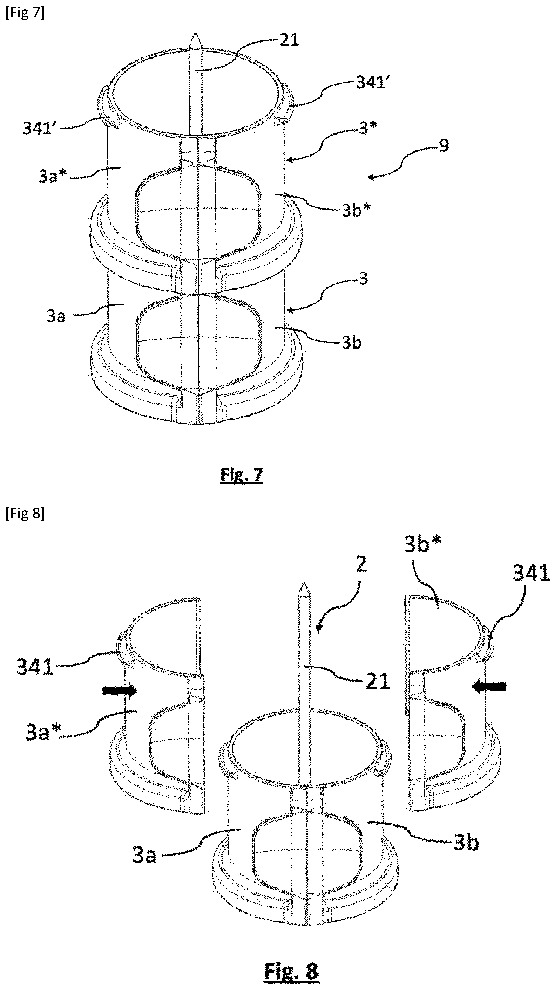

Par ailleurs, le dispositif 1 comprend de préférence des premiers moyens de solidarisation 34 à un autre moule 3*. Plus précisément, ces premiers moyens de solidarisation 34 permettent la superposition d'un autre moule 3*, dit moule additionnel, de sorte à permettre la fabrication d'un produit alimentaire présentant une hauteur plus importante, comme illustré sur les **figures 7 et 8****.** La superposition d'un moule additionnel 3* sur un dispositif 1 permet d'obtenir un ensemble 9 de fabrication d'un produit alimentaire.

De préférence, pour obtenir un tel ensemble 9, les dimensions de la broche 2 sont sélectionnées pour correspondre à la hauteur totale des deux moules 3, 3* superposés. On comprend bien évidemment qu'il est possible de superposer un nombre plus élevé de moules additionnels 3* les uns sur les autres pour fabriquer un produit alimentaire de hauteur souhaitée.

Dans cet exemple, les premiers moyens de solidarisation 34 se présentent sous la forme de butées 341 longilignes s'étendant sensiblement parallèlement au bord supérieur 303 du moule 3. Plus précisément, chaque demi-coque 3a, 3b comprend au moins une butée 341. Les butées 341 des demi-coques sont agencés de manière identique afin de garantir un positionnement optimal du moule additionnel 3*.

Selon l'exemple illustré, les butées 341 du module inférieur 3 sont dimensionnées pour que les demi-coques 3a*, 3b* du module additionnel 3* soient assemblées de sorte à enserrer les butées 341 du module inférieur 3, comme illustré sur la **figure 8****.** De cette manière, les butées 341 sont reçues dans la rainure 313 du moule additionnel 3*. Ainsi, le maintien et le centrage du moule additionnel 3* est optimal.

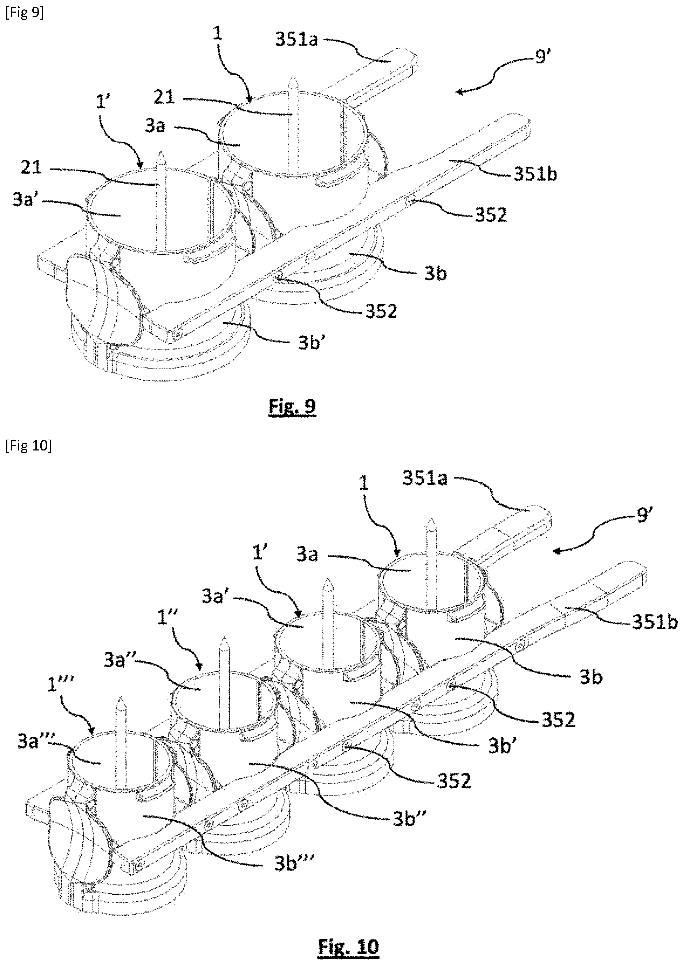

Le dispositif 1 peut également comprendre des deuxièmes moyens de solidarisation 35. Plus précisément, ces deuxièmes moyens de solidarisation 35 permettent la juxtaposition d'au moins un autre dispositif 1', dit dispositif additionnel, afin d'obtenir un ensemble 9' de fabrication de plusieurs produits alimentaires, comme illustré sur les **figures 9 et 10****.** Un tel ensemble 9' permet d'optimiser la fabrication à la chaîne de plusieurs produits alimentaires.

Les figures 9 et 10 illustrent des exemples d'ensemble 9' comprenant respectivement deux dispositifs et quatre dispositifs juxtaposés. On comprend aisément que l'on peut solidariser un nombre de dispositifs souhaité, sans pour autant s'écarter du principe général de la divulgation.

Dans ces exemples, deux supports de préhension 351a, 351b sont disposés de part et d'autre des dispositifs 1, 1', 1" et 1"'. Plus précisément, un premier support de préhension 351a est solidaire des premières demi-coques 3a, 3a', 3a", 3a"' situées d'un même côté des dispositifs 1, 1', 1" et 1"', tandis qu'un deuxième support de préhension 351b est solidaire des deuxièmes demi-coques 3b, 3b', 3b", 3"' situées de l'autre côté des dispositifs 1, 1', 1" et 1"'.

De cette manière, il est possible d'ouvrir et de fermer plusieurs moules 3, 3', 3", 3"' simultanément, de sorte à faciliter et accélérer la fabrication des produits alimentaires. De plus, cette disposition juxtaposée des dispositifs permet une fabrication ordonnée des produits alimentaires puisqu'il est possible d'ajouter le même ingrédient de manière quasiment simultanée dans chaque dispositif (par exemple avec la superposition d'abord de viande, puis de légumes, puis de viande, etc.), de sorte que chaque produit alimentaire soit sensiblement identique. Le gain de temps est donc non négligeable et permet de tenir des cadences de préparation élevée. Cela permet également d'obtenir des produits alimentaires sensiblement identiques.

La solidarisation des supports de préhension 351a, 351b auxdites demi-coques est de préférence effectuée au niveau des poignées 331, via les deuxièmes moyens de solidarisation 35 qui comprennent en outre un mécanisme de vis de fixation 352 coopérant avec des trous taraudés 353 ménagés dans les poignées 331.

On comprend évidemment que d'autres solutions de fixation des supports de préhension 351a, 351b sur les poignées 331 peuvent être envisagées sans s'écarter du principe général de la divulgation, comme un collage, un soudage, un rivetage, un emboitement à force, etc.

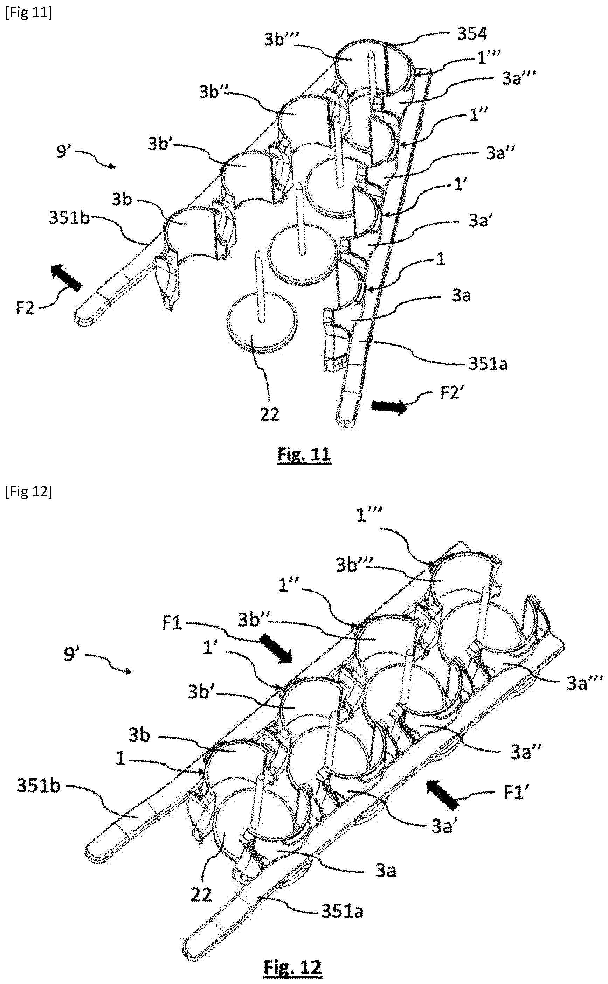

Selon une première approche, illustrée sur la **figure 12****,** les supports de préhension 351a, 351b ne sont pas connectés/reliés entre eux. Ainsi, l'ouverture des moules 3 s'effectue par écartement des supports de préhension 351a, 351b dans des directions (F1, F1') sensiblement opposées. La fermeture des moules est effectuée par un mouvement inverse.

Selon une deuxième approche, illustrée sur la **figure 11****,** les supports de préhension 351a, 351b sont connectés/reliés entre eux par une liaison pivot 354. Ainsi, l'ouverture des moules s'effectue par un pivotement/une rotation des supports de préhension 351a, 351b l'un par rapport à l'autre dans des sens de rotation (F2, F2') sensiblement opposés. La fermeture des moules est effectuée par un mouvement inverse. Il est également possible d'envisager de supprimer la liaison pivot 354 et d'obtenir un tel mouvement de pivotement de demi-coques 3a, 3b l'une par rapport à l'autre par le biais de la force magnétique créée par les aimants 321.

Cette deuxième approche est notamment avantageuse dans le cas d'un nombre important de dispositifs juxtaposés et reliés entre eux car la liaison pivot 354 permet d'obtenir un bras de levier facilitant l'ouverture des moules.

Dans ces deux approches, la fermeture de l'ensemble des moules peut toujours être facilitée par la mise en œuvre des aimants 321. La fermeture de l'ensemble des moules peut également, en complément ou alternativement, être effectuée par d'autre moyens, comme par exemple des moyens de serrage (collier de serrage) agencés sur les des supports de préhension 351a, 351b eux même.

Les supports de préhensions 351a, 351b permettent également de garantir un déplacement et/ou un transport fiable de plusieurs dispositifs de fabrication, par exemple depuis un plan de travail vers un plat de présentation, un réfrigérateur, une vitrine réfrigérée, etc. En effet, les produits alimentaires sont maintenus de manière optimale par les moules, évitant ainsi tout risque de dégradation, de chute d'aliments, etc.

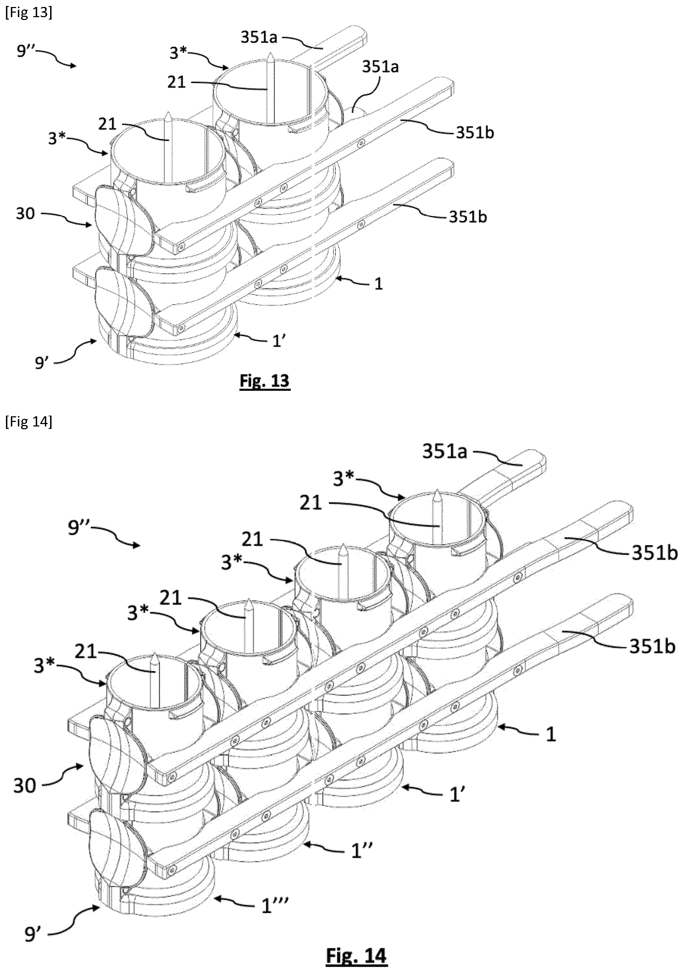

Dans une variante de réalisation, illustrée sur les **figures 13 et 14****,** il est possible de combiner la juxtaposition de dispositifs ainsi que la superposition de moules additionnels sur ces dispositifs.

Pour ce faire, il est possible d'utiliser des supports de préhension 351a, 351b pour relier/solidariser une pluralité de moules 3* additionnels ensemble (sans broche 2) de sorte à former une rangée ou un ensemble 30 de moules additionnels 3* destinés à être agencés de manière superposée sur un ensemble 9' tel que décrit en relation avec les figures 9 à 12.

Il est ainsi possible de fabriquer de manière rapide et ordonnée une pluralité de produits alimentaires de hauteur importante. Les figures 13 et 14 illustrent deux exemples d'un tel ensemble 9". On comprend aisément qu'il est possible de prévoir des ensembles 9" comprenant un nombre plus important de dispositifs et de moules additionnels. On peut aussi prévoir que tous les dispositifs 1 ne présentent pas un moule additionnel 3* superposé.

En d'autres termes, un nombre très important de configuration est envisageable sans s'écarter du principe général de la divulgation. Par exemple, bien que la description du moule précise que celui-ci est en deux parties, il est possible d'envisager des moules en plusieurs parties distinctes, par exemple trois ou quatre parties, en fonction des conditions de mise en œuvre opérationnelles. Par exemple, un moule en trois ou quatre parties peut être intéressant lorsqu'il s'agit de monter un agrégat alimentaire de taille importante. Ainsi, il est tout à fait envisagé, dans la description précédemment effectuée de remplacer un moule en deux parties par un moule en plus de deux parties. À l'inverse, pour les agrégats alimentaires de tailles réduite, il est possible de disposer d'un moule en un seul bloc, qui serait positionné sur la broche, selon les principes et explications donnés précédemment et qui comprendrait des moyens de solidarisation avec cette broche, par exemple sous la forme d'aimants, comme expliqué précédemment.

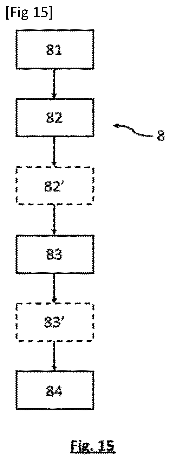

La divulgation concerne également un procédé 8 de fabrication d'un ou plusieurs produits alimentaires se présentant notamment sous la forme de tours d'aliments. Un tel procédé, illustré sur la **figure 15****,** met en œuvre un dispositif 1 de fabrication tel que décrit précédemment ou un des ensembles 9, 9', 9" décrits précédemment. Le procédé 8 comprend, pour chaque dispositif 1 :
- la fourniture 81 d'une broche 2 comprenant un socle 22 et une pique 21 s'étendant perpendiculairement au socle 22 ;
- la mise en position et le verrouillage 82 des demi-coques 3a, 3b avec le socle 22 ;
- l'assemblage 83 des aliments dans l'espace de réception 20 par perçage et empilement des aliments sur la pique 21 de la broche 2 ;
- le démoulage 84 du produit alimentaire par séparation des demi-coques des moules.

Optionnellement, le procédé peut comprendre, préalablement à l'assemblage 83 des aliments, la superposition 82' d'au moins un moule additionnel 3* lorsque l'on souhaite fabriquer un produit alimentaire de hauteur importante.

Optionnellement, le procédé peut comprendre, préalablement au démoulage 84, le déplacement 83' du dispositif 1 ou de l'ensemble 9, 9', 9" vers une zone de stockage, comme un réfrigérateur ou une vitrine réfrigérée, par exemple.

Un tel procédé permet, grâce au dispositif de la divulgation, de faciliter la fabrication de tour ou pyramide d'aliments. Le procédé permet également d'optimiser le temps de fabrication du produit alimentaire tout en permettant d'obtenir une forme régulière de ce dernier.

## Revendications

1. Dispositif (1) de fabrication d'un produit alimentaire se présentant globalement sous la forme d'une tour, le dispositif comprenant une base (2) sur laquelle des aliments sont destinés à être empilés, ladite base (2) comprenant un socle (22) et une pique (21) s'étendant perpendiculairement audit socle (22),
**caractérisé en ce que** ledit dispositif (1) comprend un moule (3) coopérant avec ladite base (2) pour former un logement de réception (20) desdits aliments empilés sur ladite base (2), ledit moule (3) comprenant au moins une première demi-coque (3a) et une deuxième demi-coque (3b), coopérant avec ladite base (2) pour former ledit logement de réception (20) desdits aliments, chacune desdites première (3a) et deuxième (3b) demi-coques comprenant des moyens de solidarisation (31) audit socle (22) situés au niveau de l'extrémité inférieure (301) desdites demi-coques (3a, 3b), lesdits moyens de solidarisation (31) comprenant un épaulement (311) s'étendant sensiblement sur l'ensemble de la périphérie de l'extrémité inférieure (301) desdites demi-coques (3a, 3b) et au moins un ergot (312) s'étendant en vis-à-vis dudit épaulement (311) et définissant avec ledit épaulement (311) une rainure de réception (313) dudit socle (22).

2. Dispositif (1) de fabrication d'un produit alimentaire selon la revendication 1, **caractérisé en ce qu'**il comprend des moyens de verrouillage (32) réversibles de ladite première demi-coque (3a) avec ladite deuxième demi-coque (3b).

3. Dispositif (1) de fabrication d'un produit alimentaire selon la revendication 2, **caractérisé en ce que** lesdits moyens de verrouillage (32) réversibles comprennent des aimants (321) disposés en vis-à-vis sur les bords latéraux (302) desdites première (3a) et deuxième (3b) demi-coques.

4. Dispositif (1) de fabrication d'un produit alimentaire selon l'une des revendications 1 à 3, **caractérisé en ce qu'**il comprend des premiers moyens de solidarisation (34) à un autre moule (3*), dit moule additionnel, disposé de manière superposée sur ledit dispositif (1).

5. Dispositif (1) de fabrication d'un produit alimentaire selon l'une des revendications 1 à 4, **caractérisé en ce qu'**il comprend des deuxièmes moyens de solidarisation (35) à au moins un autre dispositif de fabrication d'un produit alimentaire (1', 1", 1‴) disposé de manière adjacente audit dispositif (1).

6. Ensemble (9) de fabrication d'un produit alimentaire se présentant sous la forme d'une tour, ledit ensemble comprenant un dispositif (1) selon l'une des revendications 1 à 5, et un moule additionnel (3*) agencés de manière superposée sur ledit dispositif (1).

7. Ensemble (9') de fabrication d'un produit alimentaire se présentant sous la forme d'une tour, ledit ensemble comprenant au moins deux dispositifs (1, 1', 1", 1"') selon l'une des revendications 1 à 5, lesdits dispositifs (1, 1', 1", 1"') étant agencés de manière juxtaposée.

8. Ensemble (9') selon la revendication 7, **caractérisé en ce qu'**il comprend lesdits deuxièmes moyens de solidarisation (35) desdits au moins deux dispositifs (1, 1', 1", 1"') selon la revendication 7, ces deuxièmes moyens de solidarisation (35) comprenant deux supports de préhension (351a, 351b) reliant respectivement lesdites premières demi-coques (3a) et lesdites deuxièmes demi-coques (3b) desdits au moins deux dispositifs (1, 1', 1", 1'").

9. Ensemble (9") selon les revendications 7 et 8, **caractérisé en ce que** ledit ensemble comprend au moins deux dispositifs (1, 1', 1", 1‴) agencés de manière juxtaposée, au moins un desdits au moins deux dispositifs (1, 1', 1", 1"') comprenant au moins un moule additionnel (3') disposé de manière superposée audit au moins dispositif.

10. Procédé (8) de fabrication d'un ou plusieurs produits alimentaires se présentant notamment sous la forme d'une tour d'aliments, mettant en œuvre un dispositif (1) de fabrication selon l'une des revendications 1 à 5 ou d'un ensemble (9, 9', 9") selon l'une des revendications 6 à 9, ledit procédé (8) comprenant, pour chaque dispositif (1, 1', 1", 1"') :
- la fourniture (81) de ladite base (2) comprenant ledit socle (22) et ladite pique (21) s'étendant perpendiculairement audit socle (22) ;
- la mise en position et le verrouillage (82) desdites demi-coques (3a, 3b) dudit moule (3, 3', 3", 3"') avec ledit socle (22) ;
- optionnellement, la superposition (82') d'au moins un moule additionnel (3*) ;
- l'assemblage (83) desdits aliments dans ledit espace de réception (20) par perçage et empilement desdits aliments sur ladite pique (21) de ladite base (2) ;
- optionnellement, le déplacement (83') dudit dispositif (1) ou dudit ensemble (9, 9', 9") vers une zone de stockage ;
- le démoulage (84) dudit produit alimentaire par séparation desdites demi-coques desdits moules (3, 3',3 ", 3"', 3*).

## Patentansprüche

1. Vorrichtung (1) zur Herstellung eines Lebensmittels, das im Wesentlichen in Form eines Turms vorhanden ist, wobei die Vorrichtung eine Grundfläche (2) umfasst, auf der die Lebensmittel gestapelt werden sollen, wobei die Grundfläche (2) einen Sockel (22) und einen Spieß (21), der sich senkrecht zum Sockel (22) erstreckt, umfasst, **dadurch gekennzeichnet, dass** die Vorrichtung (1) eine Form (3) umfasst, die mit der Grundfläche (2) zusammenwirkt, um eine Aufnahme (20) für die auf der Grundfläche (2) gestapelten Lebensmittel zu bilden, wobei die Form (3) mindestens eine erste Halbschale (3a) und eine zweite Halbschale (3b) umfasst, die mit der Grundfläche (2) zusammenwirken, um die Aufnahme (20) für die Lebensmittel zu bilden, wobei jede der ersten (3a) und zweiten (3b) Halbschalen Mittel (31) zur Verbindung mit dem Sockel (22) umfassen, die sich auf Höhe des unteren Endes (301) der Halbschalen (3a, 3b) befinden, wobei die Verbindungsmittel (31) einen Absatz (311), der sich im Wesentlichen an der gesamten Peripherie des unteren Endes (301) der Halbschalen (3a, 3b) erstreckt, und mindestens einen Haken (312) umfassen, der sich gegenüber dem Absatz (311) erstreckt und mit dem Absatz (311) eine Nut (313) für die Aufnahme des Sockels (22) definiert.

2. Vorrichtung (1) zur Herstellung eines Lebensmittels nach Anspruch 1, **dadurch gekennzeichnet, dass** sie Mittel (32) zur reversiblen Verriegelung der ersten Halbschale (3a) mit der zweiten Halbschale (3b) umfasst.

3. Vorrichtung (1) zur Herstellung eines Lebensmittels nach Anspruch 2, **dadurch gekennzeichnet, dass** die Mittel (32) zur reversiblen Verriegelung Magnete (321) umfassen, die einander gegenüberliegend an den Seitenrändern (302) der ersten (3a) und zweiten (3b) Halbschale angeordnet sind.

4. Vorrichtung (1) zur Herstellung eines Lebensmittels nach einem der Ansprüche 1 bis 3, **dadurch gekennzeichnet, dass** sie erste Mittel (34) zur Verbindung mit einer weiteren Form (3*), Zusatzform genannt, umfasst, die übereinander auf der Vorrichtung (1) angeordnet sind.

5. Vorrichtung (1) zur Herstellung eines Lebensmittels nach einem der Ansprüche 1 bis 4, **dadurch gekennzeichnet, dass** sie zweite Mittel (35) zur Verbindung mit mindestens einer weiteren Vorrichtung zur Herstellung eines Lebensmittels (1', 1", 1'''), die neben der Vorrichtung (1) angeordnet ist, umfasst.

6. Anordnung (9) zur Herstellung eines turmförmigen Lebensmittels, wobei die Anordnung eine Vorrichtung (1) nach einem der Ansprüche 1 bis 5 und eine Zusatzform (3*) umfasst, die übereinander auf der Vorrichtung (1) angeordnet sind.

7. Anordnung (9') zur Herstellung eines turmförmigen Lebensmittels, wobei die Anordnung mindestens zwei Vorrichtungen (1, 1', 1", 1‴) nach einem der Ansprüche 1 bis 5 umfasst, wobei die Vorrichtungen (1, 1', 1", 1"') nebeneinander angeordnet sind.

8. Anordnung (9') nach Anspruch 7, **dadurch gekennzeichnet, dass** sie die zweiten Verbindungsmittel (35) der mindestens zwei Vorrichtungen (1, 1', 1", 1"') nach Anspruch 7 umfasst, wobei diese zweiten Verbindungsmittel (35) zwei Halterungen (351a, 351b) umfasst, die die ersten Halbschalen (3a) bzw. die zweiten Halbschalen (3b) der mindestens zwei Vorrichtungen (1, 1', 1", 1'") verbinden.

9. Anordnung (9") nach den Ansprüchen 7 und 8, **dadurch gekennzeichnet, dass** die Anordnung mindestens zwei Vorrichtungen (1, 1', 1", 1‴), die nebeneinander angeordnet sind, umfasst, wobei mindestens eine der mindestens zwei Vorrichtungen (1, 1', 1", 1‴) mindestens eine Zusatzform (3') umfasst, die über der mindestens einen Vorrichtung angeordnet ist.

10. Verfahren (8) zur Herstellung eines oder mehrerer Lebensmittel, die insbesondere in Form eines Lebensmittelturms vorhanden sind, welches eine Vorrichtung (1) zur Herstellung nach einem der Ansprüche 1 bis 5 oder eine Anordnung (9, 9', 9") nach einem der Ansprüche 6 bis 9 einsetzt, wobei das Verfahren (8) für jede Vorrichtung (1, 1', 1", 1"') umfasst:
- das Bereitstellen (81) der Grundfläche (2), umfassend den Sockel (22) und den Spieß (21), der sich senkrecht zum Sockel (22) erstreckt;
- das Positionieren und Verriegeln (82) der Halbschalen (3a, 3b) der Form (3, 3', 3", 3"') mit dem Sockel (22);
- optional das Darüberanordnen (82') mindestens einer Zusatzform (3*);
- das Zusammenbauen (83) der Lebensmittel in dem Aufnahmeraum (20) durch Durchstechen und Stapeln der Lebensmittel auf dem Spieß (21) der Grundfläche (2);
- optional das Verlagern (83') der Vorrichtung (1) oder Anordnung (9, 9', 9") zu einer Lagerzone;
- das Entformen (84) des Lebensmittels durch Trennen der Halbschalen der Formen (3, 3', 3", 3'", 3*).

## Claims

1. A device (1) for manufacturing a food product that is generally in the form of a tower, wherein the device includes a base (2) on which food items are intended to be stacked, wherein said base (2) includes a base plate (22) and a spike (21) that extends perpendicularly to said base plate (22), **characterised in that** said device (1) includes a mould (3) that cooperates with said base (2) to form a receiving compartment (20) for receiving said food items stacked on said base (2), wherein said mould (3) includes at least a first half shell (3a) and a second half shell (3b), which cooperate with said base (2) to form said receiving compartment (20) for receiving said food items, wherein each of said first (3a) and second (3b) half shells include attachment means (31) for attachment to said base (22) which are located at the lower end (301) of said half shells (3a, 3b), wherein said attachment means (31) include a shoulder (311) that extends essentially over the entire periphery of the lower end (301) of said half shells (3a, 3b) and at least one catch (312) that extends opposite said shoulder (311) and defines in conjunction with said shoulder (311) a receiving groove (313) for said base plate (22).

2. A device (1) for manufacturing a food product according to claim 1, **characterised in that** it includes reversible locking means (32) for locking said first half shell (3a) and said second half shell (3b) together.

3. A device (1) for manufacturing a food product according to claim 2, **characterised in that** said reversible locking means (32) include magnets (321) arranged opposite each other on the lateral edges (302) of said first (3a) and second (3b) half shells.

4. A device (1) for manufacturing a food product according to one of claims 1 to 3, **characterised in that** it includes first attachment means (34) for attachment to another mould (3*), which is designated additional mould, arranged superposed on said device (1).

5. A device (1) for manufacturing a food product according to one of claims 1 to 4, **characterised in that** it includes second attachment means (35) for attachment to at least one other device for manufacturing a food product (1', 1", 1'") which is arranged adjacent to said device (1).

6. An assembly (9) for manufacturing a food product that is in the form of a tower, wherein said assembly includes a device (1) according to one of claims 1 to 5 and an additional mould (3*) that is arranged superposed on said device (1).

7. An assembly (9') for manufacturing a food product that is in the form of a tower, wherein said assembly includes at least two devices (1, 1', 1", 1‴) according to one of claims 1 to 5, wherein said devices (1, 1', 1", 1") are arranged side by side.

8. An assembly (9') according to claim 7, **characterised in that** it includes said second attachment means (35) for attaching said at least two devices (1, 1', 1", 1"') according to claim 7 to each other, wherein these second attachment means (35) include two gripping supports (351a, 351b) that respectively join said first half shells (3a) and said second half shells (3b) of said at least two devices (1, 1', 1", 1‴).

9. An assembly (9") according to claims 7 and 8, **characterised in that** said assembly includes at least two devices (1, 1', 1", 1''') arranged side by side, wherein at least one of said at least two devices (1, 1', 1", 1"') includes at least one additional mould (3') arranged superposed on said at least one device.

10. A method (8) for manufacturing one or more food products that are in particular in the form of a tower of food items, which implements a manufacturing device (1) according to one of claims 1 to 5 or an assembly (9, 9', 9") according to one of claims 6 to 9, wherein said method (8) includes, for each device (1, 1', 1", 1"'):
- providing (81) said base (2) comprising said base plate (22) and said spike (21) that extends perpendicularly to said base plate (22);
- positioning and locking (82) said half shells (3a, 3b) of said mould (3, 3', 3", 3"') together with said base (22);
- optionally, superposing (82') at least one additional mould (3*);
- assembling (83) said food items in said receiving space (20) by piercing and stacking said food items on said spike (21) of said base (2);
- optionally, moving (83') said device (1) or said assembly (9, 9', 9") to a storage area;
- removing (84) said food product by separating said half shells of said moulds (3, 3', 3", 3'", 3*).
